# EUROPÄISCHE PATENTSCHRIFT

(11) **EP 1 913 289 B1**
(45) Veröffentlichungstag und Bekanntmachung des Hinweises auf die Patenterteilung: **15.04.2009**
(21) Anmeldenummer: 06778046.0
(22) Anmeldetag: 28.07.2006
(51) Int. Cl.: F16H 48/06, F16H 48/08, F16H 48/10

(54) **GEHÄUSELOSES DIFFERENTIAL**
DIFFERENTIAL WITHOUT A HOUSING
DIFFERENTIEL SANS CARTER

(30) Priorität: 29.07.2005 DE 102005036362
(43) Veröffentlichungstag der Anmeldung: 23.04.2008
(73) Patentinhaber: Tedrive Holding B.V., 6411 NK Heerlen (NL)
(72) Erfinder: RESSIN, Dirk, 40764 Langenfeld (DE); CHATENEY, Christoph, 53177 Bonn (DE); LIERMANN, Jürgen, 52072 Aachen (DE); PRANGE, Tobias, 50226 Frechen (DE); GÖDECKE, Ulrich, 53804 Much (DE)
(74) Vertreter: Vorberg, Jens
(86) Internationale Anmeldenummer: PCT/EP2006/064776
(87) Internationale Veröffentlichungsnummer: WO 2007/012664

(56) Entgegenhaltungen:
- WO-A-02/36991
- DE-A1- 3 926 878
- FR-A- 1 198 091
- US-A- 2 408 926
- US-A- 2 548 258

## Beschreibung

Gegenstand der vorliegenden Erfindung ist ein Differential für ein Kraftfahrzeug, für welches die Verwendung eines drehenden Gehäuses, in welchem die Seitendifferentialräder sowie die Ausgleichsräder angeordnet sind, nicht erforderlich ist. Solche gehäuselosen Differentiale weisen ein geringeres Gewicht sowie einen geringeren Bauraum auf und sind in der Regel kostengünstiger herzustellen als Differentiale mit Gehäuse. Auch die Dynamik des Kraftfahrzeugs, in welchem ein gehäuseloses Differential eingesetzt wird, wird positiv beeinflusst, da geringere Massen gedreht bzw. gefedert werden müssen.

Aus dem Stand der Technik sind bereits einige Konstruktionen für gehäuselose Differentiale bekannt. So offenbart beispielsweise die US 6,015,362 ein gehäuseloses Differential mit einem ringförmigen Tellerrad, in welchem ein Träger zur drehbaren Lagerung von zwei Ausgleichsrädern angeordnet ist. Nachteilig an dem hier offenbarten gehäuselosen Differential ist die verhältnismäßig aufwendige Lagerung des Ausgleichsradträgers im ringförmigen Tellerrad. Weiter ist es problematisch, das hier offenbarte gehäuselose Differential so auszugestalten, dass es zur Übertragung hoher Drehmomente geeignet ist.

Aus der DE 44 41 163 A1 ist ein Differential (mit durchbrochenem Gehäuse) für ein Kraftfahrzeug bekannt, welches auf Kegelzahnrädern basiert. Bei diesem Differential ist das bei konventionellen Differentialen vorgesehene geschlossene Gehäuse ersetzt durch einen weitgehend geöffneten Träger, welcher ein tellerförmiges Ringrad, auf dem zwei Ausgleichsräder gelagert sind, mit axial beabstandet angeordneten Kegelrollenlagern verbindet. Das hieraus bekannte Differentialgetriebe weist bereits ein verringertes Gewicht auf, jedoch erlaubt die Einführung eines geöffneten Differentialgehäuses keine wesentliche Verringerung des erforderlichen Bauraums. Ein Differential mit den Merkmalen nach dem Oberbegriff des Anspruchs 1 ist aus der FR 1 198 091 bekannt.

Aufgabe der vorliegenden Erfindung ist es daher, ein Differential anzugeben, welches einfach zu montieren ist und eine deutliche Verringerung des Bauraums ermöglicht.

Die Aufgabe der Erfindung wird durch ein Differential mit den Merkmalen nach Anspruch 1 gelöst. Die Ansprüche 2-8 beinhalten besondere Ausführungsarten der Erfindung.

Der Ausgleichsradträger selbst ist drehbar um die Drehachse D gelagert.

Besondere Vorteile lassen sich realisieren, wenn es sich bei den Lagern der Seitendifferentialräder um in Axialrichtung vorgespannte Lager wie Kegelrollenlager handelt.

Erfindungsgemäß bildet nun der Ausgleichsradträger des Differentials gemäß der vorliegenden Erfindung beidseitig Wellenstümpfe aus. Jedes Seitendifferentialrad bildet auf seiner dem Ausgleichsradträger zugewandten Seite eine Bohrung aus, die zur Aufnahme eines solchen Wellenstumpfs geeignet ist. Weiterhin stützt sich der Ausgleichsradträger in Axialrichtung über Axiallager an den Seitendifferentialrädern ab.

Als Axiallager kommen einfache Gleitlager zum Einsatz.

Die erfindungsgemäße Konstruktion erlaubt eine außerordentlich raumsparende Bauweise, wobei gleichzeitig eine für die Drehlagerung des Differentials eventuell erforderliche Vorspannkraft sicher aufgenommen wird. Weiterhin ist eine kontrollierte Einstellung des Zahnspiels zwischen den Seitendifferentialträgern und den Ausgleichsrädern möglich.

In einer bevorzugten Weiterbildung des erfindungsgemäßen Differentials sind die Wellenstümpfe einstückig mit dem Ausgleichsradträger ausgebildet. Alternativ hierzu können die Wellenstümpfe als Teil einer durchgehenden Welle ausgebildet sein, die durch eine zentrale Bohrung im Ausgleichsradträger hindurchgreift. Dabei ist diese Welle vorzugsweise drehfest mit dem Ausgleichsradträger verbunden, beispielsweise mittels Presspassung oder durch Formschluss.

Besondere Vorteile ergeben sich weiterhin, wenn zur Einstellung des Zahnspiels zwischen den Differentialseitenzahnrädern und den Ausgleichsrädern Distanzscheiben ausgewählter Dicke zwischen den Differentialseitenrädern und dem sich an den Differentialseitenrädern abstützenden Ausgleichsradträger angeordnet sind.

Das erfindungsgemäße Differential kann auf einfache Weise weitergebildet werden, um auch die Übertragung hoher Drehmomente zu ermöglichen. Hierzu sind die Wel-, lenstümpfe des Ausgleichsradträgers bzw. die die Wellenstümpfe ausbildende Welle als Hohlwelle ausgebildet, so dass sich eine in Axialrichtung durch den Ausgleichsradträger hindurch erstreckende zentrale Bohrung ausbildet, deren Längsachse mit der Drehachse D zusammenfällt. Weiterhin umfasst das Differential eine Spannachse, die in die zentrale Bohrung im Ausgleichsradträger eingesetzt ist und durch den Ausgleichsradträger sowie durch die Differentialseitenräder hindurch greift. Die Spannachse bildet dann an ihren beiden Enden axiale Abstützungen zur Aufnahme der in Axialrichtung nach außen wirkenden Teilungskräfte zwischen den Seitendifferentialseitenrädern und den Ausgleichsrädern aus. Diese axialen Abstützungen sind als einfache Gleitlagerungen ausgebildet.

In dem erfindungsgemäßen Differential bilden die Wellenstümpfe des Ausgleichsradträgers, die in die in den Seitendifferentialrädern ausgebildeten Bohrungen eingreifen, eine Drehlagerung aus. Auf diese Weise kann eine Drehlagerung des Ausgleichsradträgers um die Drehachse D realisiert werden, wobei sich der Ausgleichsradträger vollständig an den Seitendifferentialrädern abstützt. Diese Bauweise erlaubt eine weitere Reduzierung des Bauraums, da die sonst häufig zur Ausbildung einer Drehlagerung des Ausgleichsradträgers verwendeten Radiallager mit großem Durchmesser entfallen können. Neben der Reduzierung des Bauraums führt dies ebenfalls zu einer Verringerung des Gewichts des erfindungsgemäßen Differentials.

Weitere Merkmale und Vorteile des erfindungsgemäßen Differentials ergeben sich aus den Unteransprüchen sowie aus den Ausführungsbeispielen, die beispielhaft und nicht einschränkend zu verstehen sind und im Folgenden anhand der Zeichnung näher erläutert werden. In dieser zeigen:

Fig. 1: zeigt eine perspektivische Teildarstellung eines erfindungsgemäßen Differentials gemäß eines ersten Ausführungsbeispiels,

Fig. 2: eine seitliche Schnittansicht des Differentials gemäß Figur 1,

Fig. 3: eine Teilschnittdarstellung durch ein Differential gemäß eines zweiten Ausführungsbeispiels,

Fig. 4: eine Aufsicht auf den Ausgleichsradträger des Differentials aus Figur 3,

Fig. 5: einen vergrößerten Teilschnitt durch die Welle eines Differentials gemäß eines Ausführungsbeispiels, welches nicht zur Erfindung gehört,

Fig. 6: eine perspektivische Teilansicht eines erfindungsgemäßen Differentials gemäß eines vierten Ausführungsbeispiels, und

Fig. 7: einen Schnitt durch das in Figur 6 dargestellte erfindungsgemäße Differential.

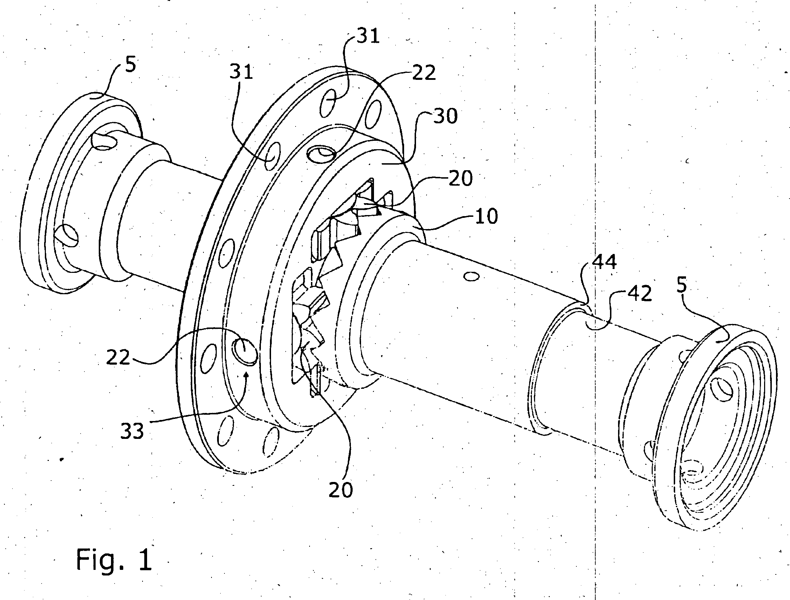

Figur 1 zeigt eine perspektivische Ansicht eines erfindungsgemäßen Differentials 1 gemäß eines ersten Ausführungsbeispiels, wobei die mit umfassten Lager 40, welche in der Regel als in Axial- und in Radialrichtung hochtragfähige vorgespannte Kegelrollenlager ausgebildet sind, nicht dargestellt sind. Anstelle der genannten Kegelrollenlager können für die Lager 40 selbstverständlich beliebige andere Lager verwendet werden, die zumindest eine ausreichende Tragfähigkeit in Radialrichtung aufweisen. Da in Abhängigkeit vom Ringrad, welches am Ausgleichsträgers 30 des erfindungsgemäßen Differentials 1 angeordnet wird, auch eine Belastung der Lager 40 in Axialrichtung auftreten kann, sind zumindest in diesem Fall Lager 40 vorzusehen, die auch eine gewisse Tragfähigkeit in Axialrichtung aufweisen.

Das erfindungsgemäße Differential 1 weist einen zentral angeordneten Ausgleichsradträger 30 auf, auf dem im gezeigten Ausführungsbeispiel vier Ausgleichsräder 20 auf Differentialstiften 22 drehbar gelagert sind. Hierzu sind im Ausgleichsradträger 30 vier symmetrisch angeordnete Ausgleichsradfenster 37 vorgesehen, in denen die Ausgleichsräder 20 Aufnahme finden. Die Differentialstifte 22 werden von in Radialrichtung verlaufenden Differentialstiftbohrungen 33 aufgenommen, die im Ausgleichsradträger 30 ausgeführt sind. Die Differentialstifte 22 werden in den Differentialstiftbohrungen 33 auf geeignete Weise festgelegt, beispielsweise mittels Sicherungsstiften oder mittels Verschraubung.

Der Ausgleichsradträger 30 weist eine Vielzahl von Anschlussbohrungen 31 auf, die in einem Ringradflansch 90 ausgeführt sind. Mittels dieser Anschlussbohrungen 31 können je nach Anwendungsfall geeignete Ringräder am Ringradflansch 90 festgelegt werden, beispielsweise außenverzahnte Ringräder, schrägverzahnte Ringräder oder hypoidverzahnte Kegelzahnräder.

Beidseits des Ausgleichradträgers 30 ist je ein Seitendifferentialrad 10 angeordnet. Jedes Seitendifferentialrad 10, welches im hier gezeigten ersten Ausführungsbeispiel als Kronrad ausgebildet ist, steht im Eingriff mit allen vier auf dem Ausgleichsradträger 30 drehbar gelagerten Ausgleichsrädern 20. Jedes Seitendifferentialrad 10 ist an seinem äußeren Ende mit einem Anschlussflansch 5 versehen, über welchen das erfindungsgemäße Differential 1 mit An- oder Abtriebswellen verbunden werden kann.

Jedes Seitendifferentialrad 10 ist - wie bereits erwähnt - mittels eines Lagers 40, welches in Figur 1 nicht gezeigt ist, drehbar um eine gemeinsame Drehachse D gelagert. Zur Aufnahme der Lager 40 ist in der äußeren Mantelfläche jedes Seitendifferentialrads 10 eine Anlageschulter 44 ausgebildet, an die sich in Axialrichtung ein Lagersitz 42 anschließt.

Der Ausgleichsradträger 30 ist wie im Folgenden noch genauer dargestellt wird, seinerseits drehbar auf den Seitendifferentialrädern 10 gelagert, so dass eine gemeinsame Drehung beider Seitendifferentialräder 10 sowie des Ausgleichsradträgers 30 um die Drehachse D möglich ist. Weiterhin ist eine differentielle Drehbewegung der beiden Seitendifferentialräder 10 um die Drehachse D möglich, was unmittelbar eine Ausgleichsdrehbewegung der Ausgleichsräder 20 um ihre jeweiligen Differentialstifte 22 und damit eine Drehbewegung des Ausgleichsradträgers 30 mit einer von der Drehgeschwindigkeit der beiden Seitendifferentialräder 10 verschiedenen Drehgeschwindigkeit zur Folge hat.

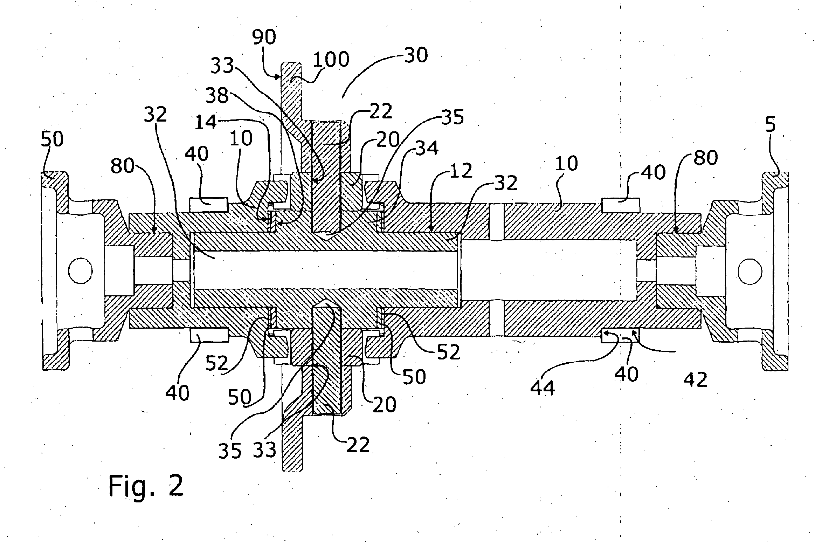

Figur 2 zeigt nun einen Schnitt durch das erfindungsgemäße Differential 1 des ersten Ausführungsbeispiels, wie es sich aus Figur 1 ergibt. Wie aus Figur 2 ersichtlich ist, bildet der Ausgleichsradträger 30 zwei Wellenstümpfe 32 aus, die in zylindrische Bohrungen 12 in den Seitendifferentialrädern 10 eingreifen. Dabei ist der Ausgleichsradträger 30 zweistückig ausgebildet, nämlich als tellerförmiges Ringrad 100, welches außenseitig den bereits erwähnten Ringradflansch 90 ausbildet, wobei das tellerförmige Ringrad 100 eine zentrale Bohrung 36 ausbildet, die koaxial mit der Drehachse D ausgeführt ist. In diese zentrale Bohrung 36 ist eine gestufte Welle 34 eingesetzt und drehfest mit dem tellerförmigen Ringrad 100 des Ausgleichsradträgers 30 verbunden. Diese drehfeste Verbindung kann beispielsweise mittels Presspassung hergestellt werden, jedoch ist auch eine formschlüssige Verbindung von Welle 34 und tellerförmigen Ringrad 100 zur Ausbildung des Ausgleichsradträgers 30 möglich.

Deutlich zu erkennen sind die in Radialrichtung im Ausgleichsradträger 30 ausgeführten Differentialstiftbohrungen 33, in die die Differentialstifte 22 eingesetzt sind. In der Welle 34 sind weiterhin Differentialstiftaufnahmen 35 ausgeführt, so dass die Differentialstifte 22 durch zentrale Bohrungen in den Ausgleichsrädern 20 hindurch bis in die Differentialstiftaufnahmen 35 hinein greifen.

Jedes Seitendifferentialrad 10 bildet auf seiner dem Ausgleichsradträger 30 zugewandten Seite eine Bohrung 12 aus, die koaxial mit der Drehachse D ist. In diese Bohrungen 12 greifen nun die Wellenstümpfe 32 der Welle 34 bzw. des Ausgleichsradträgers 30 unter Ausbildung einer Drehlagerung ein. Eine solche Drehlagerung, welche insbesondere zur Aufnahme gewisser Radialkräfte geeignet sein soll, ist durch eine geeignete Oberflächenbearbeitung und- Behandlung der Wellenstümpfe 32 sowie der Innenflächen der Bohrungen 12 als einfache Gleitlagerung ausgebildet sein. Der Ausgleichsradträger 30 stützt sich nun in Radialrichtung an den beiden Seitendifferentialrädern 10 über die in die Bohrungen 12 eingreifenden Wellenstümpfe 32 ab.

Die Seitendifferentialräder 10 ihrerseits sind mittels Lagern 40 drehbar um die Drehachse D gelagert, welche auf einen Lagersitz 42 aufgeschoben sind, bis sie zur Anlage an einer in Radialrichtung verlaufenden Anlageschulter 44 gelangen. Für die Lager 40 werden aufgrund ihrer vorteilhaften Eigenschaften vorzugsweise Kegelrollenlager verwendet, die mit einer gewissen Vorspannung zu beaufschlagen sind. Treten im konkreten Anwendungsfall eines Differentials 1 gemäß dieses Ausführungsbeispiels keine wesentlichen Axialkräfte im Bereich der Lager 40 auf, so können anstelle von Kegelrollenlagern auch Radiallager, also beispielsweise Kugellager oder Wälzlager verwendet werden.

Jedes Seitendifferential 10 ist auf seiner vom Ausgleichsradträger 30 abgewandten Seite über Splines 80 drehfest mit einem Anschlussflansch 5 verbunden.

Die erfindungsgemäße Abstützung des Ausgleichsradträgers 30 an den Seitendifferentialrädem 10 in Axialrichtung erfolgt nun über Axiallager 50, die zwischen den Ausgleichsradträger 30 und jedes Seitendifferentialrad 10 eingefügt sind. Hierzu bildet jedes Seitendifferentialrad 10 auf seiner dem Ausgleichsradträger 10 zugewandten Seite eine ringförmige Anlagefläche 14 aus, welche die Bohrung 12 umgreift. Weiterhin bildet die gestufte Welle 34 eine ringförmige Anlagefläche 38 auf, die der ringförmigen Anlagefläche 14 des Seitendifferentialrads 10 gegenüberliegt. Zwischen den beiden ringförmigen Anlageflächen 14 und 38 ist nun ein vorzugsweise als Nadellager ausgebildetes Axiallager 50 und ggf. eine Distanzscheibe ausgewählter Dicke eingefügt. Durch Anpassung der Dicke der Distanzscheibe und / oder durch Selektion von Teilen aufeinander abgestimmter Abmessungen ist es nun möglich, das Zahnspiel zwischen jedem Seitendifferentialrad 10 und den Ausgleichsrädern 20 kontrolliert einzustellen. Da sich der Ausgleichsradträger 30 über die Axiallager 50 an den Seitendifferentialrädern 10 abstützt, bleibt dieses Zahnspiel unabhängig von der vom erfindungsgemäßen Differential 1 getragenen Last konstant, so dass insbesondere ein Blockieren des Differentials 1 bei höheren Lasten sicher vermieden werden kann. Darüber hinaus erhöht die Einstellung eines optimalen Zahnspiels die Lebensdauer des erfindungsgemäßen Differentials 1 wesentlich.

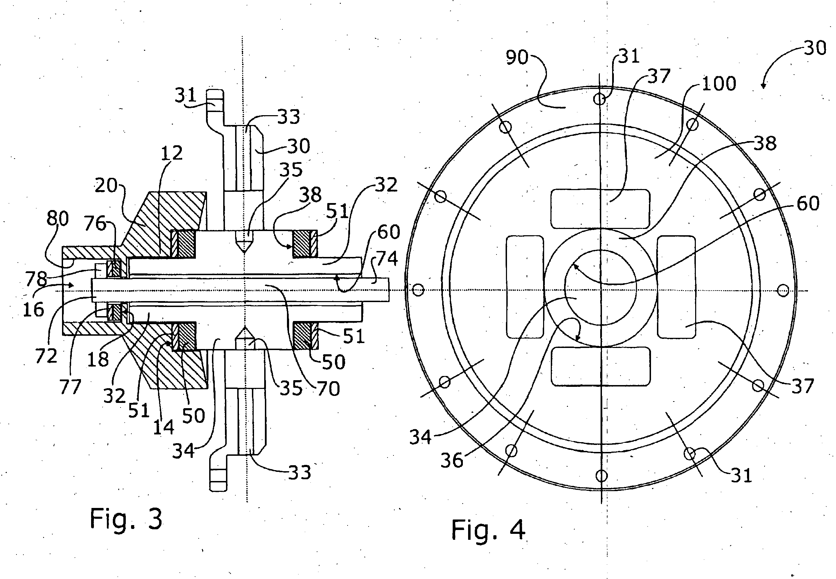

Figur 3 zeigt eine Ansicht eines Schnitts durch den Ausgleichsradträger 30 mit eingesetzter gestufter Welle 34 sowie ein Seitendifferentialrad 10 eines erfindungsgemäßen Differentials gemäß eines weiteren Ausführungsbeispiels. Dieses zweite Ausführungsbeispiel entspricht in wesentlichen Teilen dem aus Figur 1 ersichtlichen ersten Ausführungsbeispiel. Jedoch ist das hier gezeigte zweite Ausführungsbeispiel speziell zur Aufnahme hoher Drehmomente ausgebildet. Hierzu ist die Welle 34 als Hohlwelle ausgebildet, d.h., sie weist eine zentrale Bohrung 60 auf. In diese zentrale Bohrung 60 ist eine Spannachse 70 mit einem ersten Ende 72 und einem zweiten Ende 74 eingefügt. Die Spannachse 70 ist wiederum koaxial mit der Drehachse D angeordnet und greift mit ihren ersten und zweiten Enden 72, 74 in außenseitige Ausnehmungen 16 ein, die in beiden Seitendifferentialrädern 10 jeweils auf der dem Ausgleichsradträger 30 abgewandten Seite ausgebildet sind: Diese außenseitigen Ausnehmungen 16 sind insbesondere zur Verbindung mit An- bzw. Abtriebswellen ausgebildet und weisen an ihren jeweiligen Innenumfängen Splines 80 auf. Die Spannachse 70 weist an ihren ersten und zweiten Enden 72, 74 Außengewinde auf, auf die jeweils eine arretierbare Sicherungsmutter 78 aufgeschraubt ist. Zwischen der Sicherungsmutter 78 und der inneren Anlagefläche 18, welche die außenseitige Ausnehmung 16 in Axialrichtung begrenzt, sind ein als Axiallager ausgebildetes Spannlager 76 sowie eine Unterlegscheibe 77 angeordnet. Da die Spannachse 70 sowohl an ihrem ersten Ende 72 als auch an ihrem zweiten Ende 74 entsprechend ausgebildet ist, ist die Spannachse 70 dazu in der Lage, die bei der Übertragung höhere Drehmomente über das erfindungsgemäße Differential 1 auftretenden höheren Teilungskräfte aufzunehmen, die zwischen den Seitendifferentialrädern 10 und den Ausgleichsrädern 20 auftreten können.

Figur 4 zeigt eine Aufsicht auf den zweiteilig ausgeführten Ausgleichsradträger 30 gemäß des ersten und zweiten Ausführungsbeispiels (Figuren 1,2 und 3). Der Ausgleichsradträger 30 umfasst ein tellerförmiges Ringrad 100, welches eine zentrale Bohrung 36 ausbildet. In diese zentrale Bohrung 36 ist eine gestufte Welle 34 mittels Presspassung eingesetzt, welche ihrerseits eine zentrale Bohrung 60 ausbildet, welche beispielsweise eine Spannachse 70 in sich aufnehmen kann. Weiterhin bildet die gestufte Welle 34 in Radialrichtung verlaufende ringförmige Anlageflächen 38 aus, an denen die Axiallager 50 (hier nicht gezeigt) zur Anlage gelangen.

Weiterhin sind die im tellerförmigen Ringrad 100 ausgebildeten Ausgleichsradfenster 37 ersichtlich.

Schließlich sind die in Umfangsrichtung äquidistant angeordneten Anschlussbohrungen 31 zu ersehen, die zum Anschluss eines geeignet gewählten ringförmigen Zahnrads an den Ringradflansch 90 vorgesehen sind. Das ringförmige Zahnrad dient dann der Verbindung mit einer weiteren An- oder Abtriebswelle.

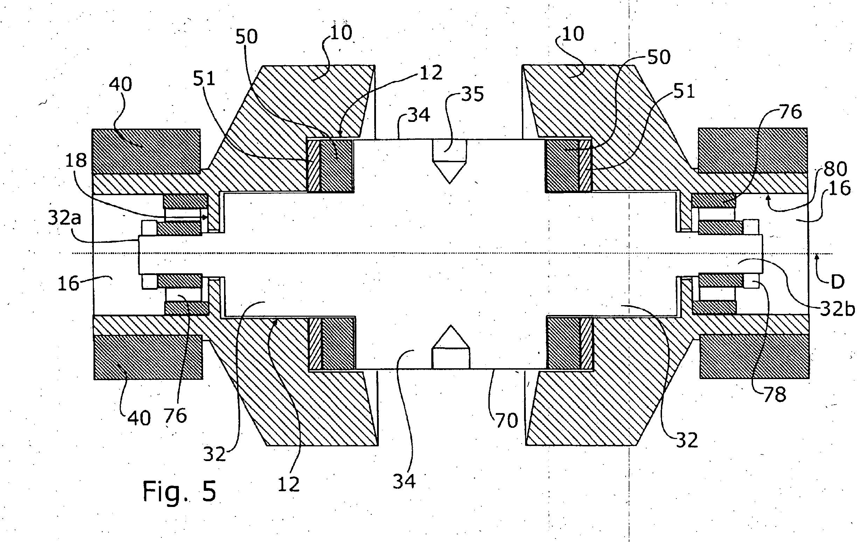

Figur 5 zeigt nun einen Schnitt durch ein Differential 1 gemäß eines Ausführungsbeispiels, welches nicht zur Erfindung gehört und welches ebenfalls zur Aufnahme höherer Drehmomente geeignet ist. Weiterhin ist das Differential 1 gemäß des dritten Ausführungsbeispiels zur Aufnahme höherer Axialkräfte geeignet, die beispielsweise durch unsymmetrische Anordnung eines Ringrads am Ringradflansch 90 oder durch eine Verzahnung des am Ringradflansch 90 angeordneten Ringrads, welcher höhere Teilungskräfte zur Folge hat, verursacht werden können. Im dritten Ausführungsbeispiel weist die gestufte Welle 34, welche in die zentrale Bohrung 36 des tellerförmigen Ringrads 100 eingesetzt ist, drei verschiedene Durchmesser auf und ist nicht als Hohlwelle ausgebildet. Die Wellenstümpfe 32 bilden an ihren außenseitigen Enden Wellenstumpffortsätze 32 a und 32 b mit verringertem Durchmesser auf.

Wie im zweiten Ausführungsbeispiel sind in den Seitendifferentialrädern 10 außenseitige Ausnehmungen 16 mit gesplinten Innenflächen 80 ausgebildet, die in Axialrichtung von inneren Anlageflächen 18 begrenzt werden. Auf den Wellenstumpffortsätze 32 a und 32 b werden nach Aufsetzen der Axiallager 50, der Distanzscheiben 52 sowie der Seitendifferentialräder 10 wiederum Spannlager 76 angeordnet, die im gezeigten dritten Ausführungsbeispiel jedoch nicht als reine Axiallager, sondern als in Radial- und Axialrichtung belastbare Lager, beispielsweise als Schrägrollenlager ausgebildet sind.

Weiterhin sind die Innendurchmesser der Bohrungen 12 in den Seitendifferentialrädern 10 so bemessen, dass die Wellenstümpfe 32 im Bereich der Bohrungen 12 nicht in Kontakt mit den Seitendifferentialrädern 10 gelangen, d.h., an dieser Stelle wird keine Drehlagerung zwischen Welle 34 und Seitendifferentialrad 10 ausgebildet. Die in den ersten Ausführungsbeispielen durch eine Gleitlagerung realisierte Drehlagerung von Welle 34 bzw. Ausgleichsradträger 30 auf den Seitendifferentialrädern 10 ist hier ersetzt durch eine Drehlagerung, die gebildet wird einerseits durch die Axiallager 50, welche die evtl. erforderlichen Vorspannkräfte für die Lager 40 aufnehmen, und die Spannlager 76, welche einerseits die sich zwischen den Seitendifferentialrädern 10 und den Ausgleichsrädern 20 ergebenden Teilungskräfte aufnehmen, und die andererseits die Radial bzw. Axialkräfte aufnehmen, welche vom Eingriff des ringförmigen Zahnrads, welches am Ringradflansch 90 angeordnet ist, in ein korrespondierendes Zahnrad, welches mit einer An- oder Abtriebswelle verbunden ist, verursacht sein können.

Ähnlich wie im Fall der Spannachse 70, welche im zweiten Ausführungsbeispiel vorgesehen ist, sind die außen liegenden Enden der Wellenstumpffortsätze 32 a und 32 b mit Außengewinden versehen, auf die Sicherungsmuttern 78 aufgeschraubt sind. Zur Arretierung dieser Sicherungsmuttern 78 kann auf beliebige aus dem Stand der Technik geeignete Verfahren zurückgegriffen werden, beispielsweise kann hier eine weitere Mutter zur Konterung vorgesehen werden.

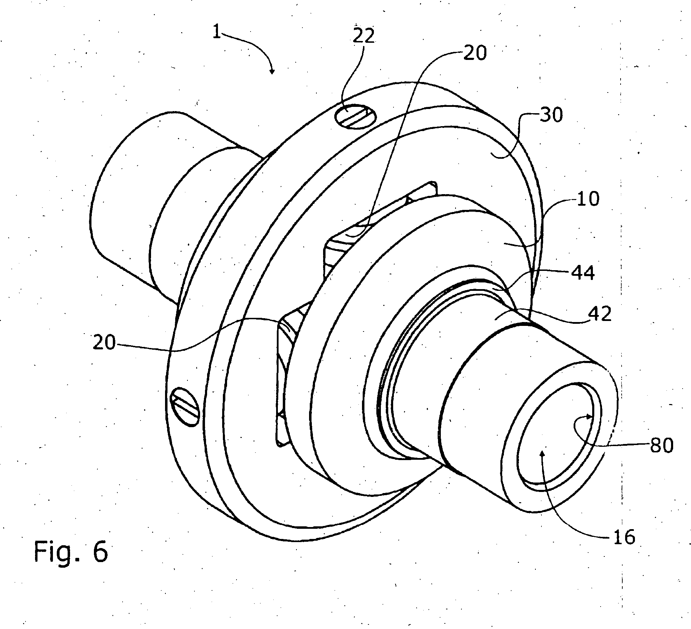

Figur 6 zeigt nun eine perspektivische Teilansicht eines erfindungsgemäßen Differentials 1 gemäß eines vierten Ausführungsbeispiels, aus welchem sich die kompakte Bauform des erfindungsgemäßen gehäuselosen Differentials 1 unmittelbar erschließt. Auch hier ist ein zentral angeordneter Ausgleichsradträger 30 vorgesehen, auf welchem vier Ausgleichsräder 20 auf Differentialstiften 22 drehbar gelagert sind. In diese vier Ausgleichsräder 20 greifen zwei Seitendifferentialräder 10 ein, die wiederum als Kronräder ausgebildet sind. An dieser Stelle ist selbstverständlich wie auch im Fall der vorangehenden Ausführungsbeispiele die Verwendung von kegeligen Zahnrädern möglich. Das erfindungsgemäße Differential 1 ist auf die Verwendung mit Kronrädern beschränkt, wobei die Verwendung von Kronrädern die Realisierung eines besonders kompakten und hoch belastbaren Differentials 1 erlaubt.

Weiterhin ist aus Figur 6 die außenseitige Ausnehmung 16 der Seitendifferentialräder 10 zu ersehen, welche zum Anschluss an An- oder Abtriebswellen auf ihrer Innenfläche mittels Splines 80 versehen sind. Auch hier sind die zur Drehlagerung des gesamten Differentials 1 erforderlichen Lager 40 nicht gezeigt, jedoch sind der Lagersitz 42 sowie die Anlageschulter 44, welche auf den Seitendifferentialrädern 10 ausgebildet sind, deutlich zu erkennen.

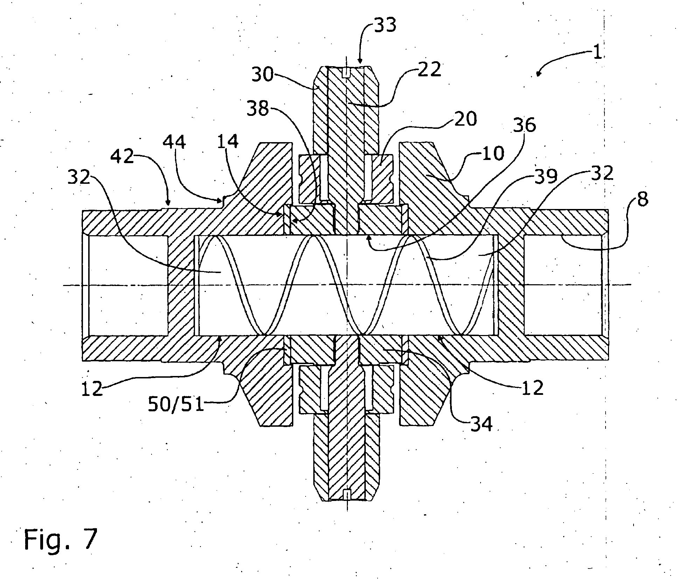

Figur 7 zeigt schließlich einen Schnitt durch das in Figur 6 dargestellte erfindungsgemäße Differential 1 gemäß des vierten Ausführungsbeispiels. Im vierten Ausführungsbeispiel ist die Welle 34 als Welle mit durchgehendem Außendurchrhesser ausgebildet. Entsprechend sind die ringförmigen Anlageflächen 38 auf dem tellerförmigen Ringrad 100 des Ausgleichsradträgers 30 ausgebildet. Auch hier ist zwischen die ringförmige Anlagefläche 14 des Seitendifferentialrads und die ringförmige Anlagefläche 38 des Ausgleichsradträgers 30 sowohl ein Axiallager 50 als auch eine Distanzscheibe 52 eingefügt.

Der Ausgleichsradträger 30 bildet wiederum eine zentrale Bohrung 36 aus, in die die Welle 34 eingesetzt und mittels Presspassung drehfest mit dem tellerförmigen Ringrad 100 verbunden ist. Die Innenflächen der Bohrung 12 in den Seitendifferentialrädern 10 bilden gemeinsam mit den Außenflächen der-Wellenstümpfe 32 Gleitlager aus. Um eine ausreichende Beölung dieser Gleitlager sicherzustellen, sind in der Umfangsfläche der Wellenstümpfe 32 gegenläufige spiralige Schmiernuten 39 eingebracht, welche unabhängig von der relativen Drehrichtung von Seitendifferentialrad 10 und Wellenstumpf 32 in der Bohrung 12 einen kontinuierlichen Öltransport in die Bohrung 12 sicherstellen.

Das erfindungsgemäße Differential ist insbesondere geeignet als Vorderachsdifferential eines vorderradgetriebenen Fahrzeugs, als Hinterachsdifferential eines hinterachsgetriebenen Fahrzeugs sowie als Mittendifferential eines allradgetriebenen Fahrzeugs. Aufgrund seiner außerordentlich geringen Baugröße kann es ohne weiteres in bestehende Getriebegehäuse integriert werden. Dies gilt insbesondere im Bereich der vorderradgetriebenen Kraftfahrzeuge, da bei diesen das Schaltgetriebe des Kraftfahrzeugs in der Regel unmittelbar angrenzend an die angetriebene Vorderachse angeordnet ist, so dass das erfindungsgemäße Differential hier ohne weiteres in das Gehäuse des Schaltgetriebes integriert werden kann.

Die vorliegende Erfindung ist gerichtet auf das allgemeine Konzept für ein gehäuseloses Differential, welches sich aus dem unabhängigen Anspruch ergibt. Die gezeigten Ausführungsbeispiele sind als bevorzugte Ausführungsformen anzusehen, die Erfindung ist jedoch nicht auf diese bevorzugten Ausführungsformen beschränkt.

**Bezugszeichen**
- 1: gehäuseloses Differential
- 5: Anschlussflansch
- 10: Seitendifferentialrad
- 12: Bohrung
- 14: ringförmige Anlagefläche
- 16: außenseitige Ausnehmung
- 18: innere Anlagefläche
- 20: Ausgleichsrad
- 22: Differentialstift
- 30: Ausgleichsradträger
- 31: Anschlussbohrung
- 32: Wellenstumpf
- 32a + b: Wellenstumpffortsätze
- 33: Differentialstiftbohrung
- 34: Welle
- 35: Differentialstiftaufnahme
- 36: zentrale Bohrung
- 37: Ausgleichsradfenster
- 38: ringförmige Anlagefläche
- 39: Schmiernut
- 40: Lager
- 42: Lagersitz
- 44: Anlageschulter
- 50: Axiallager
- 52: Distanzscheibe
- 60: zentrale Bohrung
- 70: Spannachse
- 72: erstes Ende
- 74: zweites Ende
- 76: Spannlager
- 77: Unterlegscheibe
- 78: Sicherungsmutter
- 80: Splines
- 90: Ringradflansch
- 100: Tellerförmiges Ringrad

## Patentansprüche

1. Differential (1) für ein Kraftfahrzeug ohne drehendes Gehäuse, in welchem die Seitendifferentialräder sowie die Ausgleichsräder angeordnet sind, mit den folgenden Merkmalen:
a. Zwei koaxial ausgerichtete, in Axialrichtung beabstandet angeordnete Seitendifferentialräder (10), wobei jedes Seitendifferentialrad (10) mittels eines Lagers (40) drehbar um eine gemeinsame Drehachse D gelagert ist,
b. zumindest zwei Ausgleichsräder (20), wobei jedes Ausgleichsrad (20) in Eingriff mit beiden Seltendifferentialrädern (10) steht,
c. ein zwischen den Seitendifferentialrädern (10) angeordneter Ausgleichsradträger (30), auf dem die Ausgleichsräder (20) drehbar gelagert sind, wobei der Ausgleichsradträger (30) drehbar um die Drehachse D gelagert ist,
wobei
d. der Ausgleichsradträger (30) beidseitig Wellenstümpfe (32) ausbildet,
e. jedes Seitendifferentialrad (10) auf seiner dem Ausgleichsradträger (30) zugewandten Seite eine Bohrung (12) zur Aufnahme eines Wellenstumpfs (32) ausbildet,
**dadurch gekennzeichnet, dass**
f. die Seitendifferentialräder (10) als Kronräder ausgebildet sind, und
g. sich der Ausgleichsradträger (30) in Axialrichtung und in Radialrichtung über als einfache Gleitlager ausgebildete Axiallager (50) bzw. Radialla-ger an den Seitendifferentialrädern (10) abstützt.

2. Differential (1) gemäß Anspruch 1, **dadurch gekennzeichnet, dass** die Wellenstümpfe (32) einstückig mit dem Ausgleichsradträger (30) ausgebildet sind.

3. Differential (1) gemäß Anspruch 1, **dadurch gekennzeichnet, dass** die Wellenstümpfe (32) als Welle (34) ausgebildet sind, die durch eine zentrale Bohrung (36) im Ausgleichsradträger (30) hindurch greift.

4. Differential (1) gemäß Anspruch 3, **dadurch gekennzeichnet, dass** die Welle (34) drehfest mit dem Ausgleichsradträger (30) verbunden ist.

5. Differential (1) gemäß Anspruch 1, **dadurch gekennzeichnet, dass** der Ausgleichsradträger (30) beiderseits ringförmige Anlageflächen (38) ausbildet, die in Radialrichtung verlaufen und eine Anlage für die Axiallager (50) ausbilden.

6. Differential (1) gemäß Anspruch 1, **dadurch gekennzeichnet, dass** jedes Seitendifferentialrad (10) auf seiner dem Ausgleichsradträger (30) zugewandten Seite eine ringförmige Anlagefläche (14) ausbildet, die In Radialrichtung verläuft und eine Anlage für ein Axiallager (50) ausbildet.

7. Differential (1) gemäß Anspruch 1, **dadurch gekennzeichnet, dass** zur Einstellung des Zahnspiels zwischen den Differentialseitenrädern (10) und den Ausgleichsrädern (20) Distanzscheiben (52) zwischen den Differentialseitenrädern (10) und dem sich an den Differentialseitenrädern (10) abstützenden Ausgleichsradträger (30) angeordnet sind.

8. Differential (1) gemäß Anspruch 1, **dadurch gekennzeichnet, dass**
a. die Wellenstümpfe (32) als Hohlwellen ausgebildet sind, so dass sich eine in Axialrichtung durch den Ausgleichsradträger (30) hindurch erstreckende zentrale Bohrung (60) ausbildet,
b. das Differential eine Spannachse (70) aufweist, die in die zentrale Bohrung (60) eingesetzt ist und durch den Ausgleichsradträger (30) und durch die Differentialseitenräder (10) hindurch greift, und
c. die Spannachse (70) an ihren beiden Enden (72, 74) axiale Abstützungen zur Aufnahme der in Axialrichtung wirkenden Teilungskräfte zwischen den Seitendifferentialrädern (10) und den Ausgleichsrädern (20) ausbildet.

## Claims

1. A differential (1) for a motor vehicle with no rotating housing accommodating the differential side wheels as well as the compensating wheels, said differential having the following features:
a. two coaxially oriented differential side wheels (10) that are spaced apart in the axial direction, each differential side wheel (10) being mounted for rotation about a common axis of rotation D by means of a bearing (40),
b. at least two compensating wheels (20), each compensating wheel (20) engaging two differential side wheels (10),
c. a compensating wheel carrier (30) that is disposed between the differential side wheels (10) and on which the compensating wheels (20) are rotatably carried, said compensating wheel carrier (30) being mounted for rotation about the axis of rotation D,
wherein
d. the compensating wheel carrier (30) forms shaft journals (32) on either side,
e. each differential side wheel (10) forms a hole (12) for receiving a shaft journal (32) on its side turned toward the compensating wheel carrier (30),
**characterized in that**
f. the differential side wheels (10) are configured to be crown gears, and
g. the compensating wheel carrier (30) abuts the differential side wheels (10) in the axial direction and in the radial direction through axial bearings (50) or radial bearings configured to be plain bush bearings.

2. The differential (1) as set forth in claim 1, **characterized in that** the shaft journals (32) are formed integral with the compensating wheel carrier (30).

3. The differential (1) as set forth in claim 1, **characterized in that** the shaft journals (32) are configured to be a shaft (34) that extends through a central hole (36) in the compensating wheel carrier (30).

4. The differential (1) as set forth in claim 3, **characterized in that** the shaft (34) is non-rotatably linked to the compensating wheel carrier (30).

5. The differential (1) as set forth in claim 1, **characterized in that** the compensating wheel carrier (30) forms annular abutment surfaces (38) on either side, said abutment surfaces extending in the radial direction and forming an abutment for the axial bearings (50).

6. The differential (1) as set forth in claim 1, **characterized in that** each differential side wheel (10) forms an annular abutment surface (14) on its side turned toward the compensating wheel carrier (30), said annular abutment surface extending in the radial direction and forming an abutment for an axial bearing (50).

7. The differential (1) as set forth in claim 1, **characterized in that** spacer washers (52) are interposed between the differential side wheels (10) and the compensating wheel carrier (30) abutting the differential side wheels (10) for adjusting the backlash between the differential side wheels (10) and the compensating wheels (20).

8. The differential (1) as set forth in claim 1, **characterized in that**
a. the shaft journals (32) are configured to be hollow shafts so that a central hole (60) forms, which extends through the compensating wheel carrier (30) in the axial direction,
b. the differential comprises a tension axle (70) that is inserted in the central hole (60) and that extends through the compensating wheel carrier (30) and through the differential side wheels (10) and
c. the tension axle (70) forms on its two ends (72, 74) axial abutments for taking the splitting forces acting in the axial direction between the differential side wheels (10) and the compensating wheels (20).

## Revendications

1. Différentiel (1) pour un véhicule automobile, sans carter tournant dans lequel sont disposés les pignons latéraux de différentiel ainsi que les satellites, présentant les caractéristiques suivantes :
a. deux pignons latéraux de différentiel (10) orientés coaxialement et espacés dans la direction axiale, chacun des pignons latéraux de différentiel (10) étant logé à rotation autour d'un axe commun de rotation D par l'intermédiaire d'un palier (40),
b. au moins deux satellites (20), chacun des satellites (20) étant en prise avec les deux pignons latéraux de différentiel (10),
c. un porte-satellites (30) qui est disposé entre lesdits pignons latéraux de différentiel (10) et sur lequel lesdits satellites (20) sont logés à rotation, le porte-satellites (30) étant logé à rotation autour de l'axe de rotation D,
d. ledit porte-satellites (30) formant, de part et d'autre, des bouts d'arbre (32),
e. chacun des pignons latéraux de différentiel (10) formant, sur sa face tournée vers le porte-satellites (30), un trou (12) destiné à recevoir un bout d'arbre (32),
**caractérisé par le fait que**
f. les pignons latéraux de différentiel (10) sont réalisés en tant que roues de couronne, et que
g. ledit porte-satellites (30) s'appuie, dans la direction axiale et dans la direction radiale, par l'intermédiaire de paliers axiaux (50) réalisés comme simples paliers lisses ou bien de paliers radiaux, sur les pignons latéraux de différentiel (10).

2. Différentiel (1) selon la revendication 1, **caractérisé par le fait que** les bouts d'arbre (32) sont réalisés d'un seul tenant avec le porte-satellites (30).

3. Différentiel (1) selon la revendication 1, **caractérisé par le fait que** les bouts d'arbre (32) sont réalisés comme arbre (34) qui passe à travers un trou central (36) ménagé dans le porte-satellites (30).

4. Différentiel (1) selon la revendication 3, **caractérisé par le fait que** ledit arbre (34) est relié de manière solidaire en rotation au porte-satellites (30).

5. Différentiel (1) selon la revendication 1, **caractérisé par le fait que** ledit porte-satellites (30) forme, de part et d'autre, des surfaces annulaires d'appui (38) qui s'étendent dans le sens radial et forment un appui pour les paliers axiaux (50).

6. Différentiel (1) selon la revendication 1, **caractérisé par le fait que**, sur sa face montrant vers le porte-satellites (30), chacun des pignons latéraux de différentiel (10) forme une surface annulaire d'appui (14) qui s'étend dans la direction radiale et forme un appui pour un palier axial (50).

7. Différentiel (1) selon la revendication 1, **caractérisé par le fait que**, pour régler le jeu de dents entre les pignons latéraux de différentiel (10) et les satellites (20), des rondelles d'écartement (52) sont disposées entre les pignons latéraux de différentiel (10) et le porte-satellites (30) s'appuyant sur les pignons latéraux de différentiel (10).

8. Différentiel (1) selon la revendication 1, **caractérisé par le fait que**
a. les bouts d'arbre (32) sont réalisés comme arbres creux de sorte qu'il se forme un trou central (60) s'étendant à travers le porte-satellites (30) dans le sens axial,
b. le différentiel présente un axe tendeur (70) qui est inséré dans ledit trou central (60) et qui traverse le porte-satellites (30) et les pignons latéraux de différentiel (10), et
c. ledit axe tendeur (70) forme, à ses deux extrémités (72, 74), des appuis axiaux destinés à absorber les efforts d'écartement agissant dans la direction axiale et se présentant entre les pignons latéraux de différentiel (10) et les satellites (20).
